# EUROPEAN PATENT SPECIFICATION

(11) **EP 4 478 760 B1**
(45) Date of publication and mention of the grant of the patent: **14.10.2026**
(21) Application number: 23774567.4
(22) Date of filing: 09.03.2023
(51) Int. Cl.: H04L 9/40, H04W 12/03, H04W 12/0431, H04W 12/06, H04W 76/10, H04W 84/12, H04W 92/10, H04W 36/00, H04W 48/18, H04W 48/20

(54) **COMMUNICATION SYSTEM AND METHOD, SERVER, ACCESS POINT DEVICE, COMMUNICATION TERMINAL, AND PROGRAM**
KOMMUNIKATIONSSYSTEM UND -VERFAHREN, SERVER, ZUGANGSPUNKTVORRICHTUNG, KOMMUNIKATIONSENDGERÄT UND PROGRAMM
SYSTÈME ET PROCÉDÉ DE COMMUNICATION, SERVEUR, DISPOSITIF DE POINT D'ACCÈS, TERMINAL DE COMMUNICATION ET PROGRAMME

(30) Priority: 22.03.2022 JP 2022045981
(43) Date of publication of application: 18.12.2024
(73) Proprietor: Softbank Corp., Tokyo 105-7529 (JP)
(72) Inventor: YABUKI, Ayumu, Tokyo 105-7529 (JP); ANDO, Naozumi, Tokyo 105-7529 (JP)
(74) Representative: SSM Sandmair
(86) International application number: PCT/JP2023/009122
(87) International publication number: WO 2023/181968

(56) References cited:
- WO-A1-2018/029952
- JP-A- 2004 072 631
- JP-A- 2004 088 148
- JP-A- 2012 504 354
- JP-A- 2017 118 243
- US-A1- 2014 181 904
- US-A1- 2015 215 777
- US-A1- 2016 302 064

## Description

### TECHNICAL FIELD

The present invention relates to a communication between a communication terminal and an access point apparatus of wireless connection.

### BACKGROUND ART

There is conventionally known a wireless LAN access point apparatus (hereinafter also referred to as an "AP apparatus") that is set in a room of building, etc., and performs a radio communication complying with various standards of IEEE802.11 with a communication terminal.

Patent Literature 1 discloses a solution for WLAN Security for Integrated eNB/AP.

Patent Literature 2 discloses a mesh network in which plural AP apparatuses communicate with each other and cooperate.

### CITATION LIST

### PATENT LITERATURE

Patent Literature 1: US2015215777A1.
Patent Literature 2:
   Japanese Unexamined Patent Application Publication No. 2021-052291.

### TECHNICAL PROBLEM

In the conventional AP apparatus, there is a problem in which radio waves used for radio communication with communication terminals pass through walls, etc., or spread over a wide range, which raises a concern about deterioration of security such as confidentiality and unauthorized connections of radio communications.

In the foregoing mesh network, there is a problem in which the network becomes a closed network, making it difficult to construct an open network environment using an access point apparatus of wireless connection that has a high degree of freedom in combining and disposing AP apparatuses to which communication terminals can connect.

### GENERAL DISCLOSURE

A communication system according to an aspect of the present invention comprises an access point apparatus of wireless connection that is capable of performing a radio communication with a communication terminal using radio waves in a terahertz band, a base station of a mobile communication network that forms a cell overlapping at least partially with a radio communication area of the access point apparatus, and is capable of performing a radio communication with the communication terminal when the communication terminal is located in the cell, and a server capable of communicating with the communication terminal via the base station of the mobile communication network and communicating with the access point apparatus via another communication network different from the mobile communication network. The server receives information of a connection request from the communication terminal via the base station of the mobile communication network, when there is the connection request is made from the communication terminal to the access point apparatus based on authentication information that is set in advance, issues a common encryption key used for communication between the access point apparatus and the communication terminal when receiving the information of the connection request from the communication terminal, transmits the common encryption key to the communication terminal via the base station of the mobile communication network, and transmits the common encryption key to the access point apparatus via the other communication network. The access point apparatus receives the common encryption key from the server via the other communication network, and starts a communication with the communication terminal using the common encryption key.

In the foregoing communication system, the access point apparatus may form plural beams that have antenna directivities different from each other and are set identifiers different from each other for the radio communication area, and the server may issue a common encryption key used for communication between the access point apparatus and the communication terminal via the beam, when the identifier of the beam is included in the information of the connection request received from the communication terminal.

In the foregoing communication system, the communication system may further comprise a communication terminal capable of performing a communication via the access point apparatus and a communication via the base station of the mobile communication network. Herein, the communication terminal transmits the connection request to the access point apparatus based on the authentication information, in an area where the radio communication area of the access point apparatus and the cell overlap, transmits the information of the connection request to the server via the base station of the mobile communication network, receives the common encryption key from the server via the base station of the mobile communication network, and starts a communication with the access point apparatus using the common encryption key.

A server according to another aspect of the present invention comprises means for receiving information of a connection request from the communication terminal via a base station of a mobile communication network, when the connection request is made from the communication terminal to the access point apparatus based on authentication information that is set in advance, means for issuing a common encryption key used for communication between the access point apparatus and the communication terminal when receiving the information of the connection request from the communication terminal, means for transmitting the common encryption key to the communication terminal via the base station of the mobile communication network, and means for transmitting the common encryption key to the access point apparatus via the other communication network.

An access point apparatus according to yet another aspect of the present invention comprises means for receiving a connection request transmitted from the communication terminal based on authentication information that is set in advance, means for receiving the common encryption key from the server via the other communication network, and means for starting a communication with the communication terminal using the common encryption key.

A communication terminal according to yet another aspect of the present invention comprises means for transmitting a connection request to the access point apparatus based on the authentication information, in an area where the radio communication area of the access point apparatus and the cell overlap, means for transmitting information of the connection request to the server via the base station of the mobile communication network, means for receiving the common encryption key from the server via the base station of the mobile communication network, and means for starting a communication with the access point apparatus using the common encryption key.

A method according to yet another aspect of the present invention is a method for performing a communication between a communication terminal and an access point apparatus of wireless connection using radio waves in the terahertz band. This method includes transmitting a connection request to the access point apparatus based on authentication information that is set in advance, by the communication terminal, and receiving the connection request transmitted from the communication terminal by the access point apparatus. Further, the method includes receiving information of the connection request from the communication terminal via a base station of a mobile communication network, by a server, when the connection request is made from the communication terminal to the access point apparatus based on authentication information that is set in advance, issuing a common encryption key used for communication between the access point apparatus and the communication terminal, by the server, when receiving information of the connection request from the communication terminal, transmitting the common encryption key to the communication terminal via the base station of the mobile communication network, by the server, and transmitting the common encryption key to the access point apparatus via the other communication network, by the server. Furthermore, the method includes receiving the common encryption key from the server via the other communication network, by the access point apparatus, receiving the common encryption key from the server via the base station of the mobile communication network, by the communication terminal, starting a communication with the communication terminal using the common encryption key, by the access point apparatus, and starting a communication with the access point apparatus using the common encryption key, by the communication terminal.

A program according to yet another aspect of the present invention is a program executed by a computer or processor provided in the server of the communication system. This program includes a program code for receiving information of a connection request from the communication terminal via a base station of a mobile communication network, when the connection request is made from the communication terminal to the access point apparatus based on authentication information that is set in advance, a program code for issuing a common encryption key used for communication between the access point apparatus and the communication terminal, when receiving information of the connection request from the communication terminal, a program code for transmitting the common encryption key to the communication terminal via the base station of the mobile communication network, and a program code for transmitting the common encryption key to the access point apparatus via the other communication network.

A program according to yet another aspect of the present invention is a program executed by a computer or processor provided in the access point apparatus of the communication system. This program includes a program code for receiving a connection request transmitted from the communication terminal based on authentication information that is set in advance, a program code for receiving the common encryption key from the server via the other communication network, and a program code for starting a communication with the communication terminal using the common encryption key.

A program according to yet another aspect of the present invention is a program executed by a computer or processor provided in the communication terminal of the communication system. This program includes a program code for transmitting a connection request to the access point apparatus based on the authentication information, in an area where the radio communication area of the access point apparatus and the cell overlap, a program code for transmitting information of the connection request to the server via the base station of the mobile communication network, a program code for receiving the common encryption key from the server via the base station of the mobile communication network, and a program code for starting a communication with the access point apparatus using the common encryption key.

The foregoing program for generating the common encryption key includes a learned model used for machine learning.

### ADVANTAGEOUS EFFECTS OF INVENTION

According to the present invention, it is possible to communicate with high confidentiality and security between an access point apparatus and a communication terminal, even when constructing an open network environment using an access point apparatus of wireless connection.

### BRIEF DESCRIPTION OF DRAWINGS

[FIG. 1] FIG. 1 is an illustration showing an example of a schematic configuration of a communication system according to an embodiment.
[FIG. 2] FIG. 2 is a flowchart showing an example of procedures when starting a communication between a communication terminal and an access point apparatus in the communication system according to the embodiment.

### DESCRIPTION OF EMBODIMENTS

Hereinafter, embodiments of the present invention are described with reference to the drawings.

A communication system according to the embodiment described herein is a physically highly secure communication system using a terahertz access point.

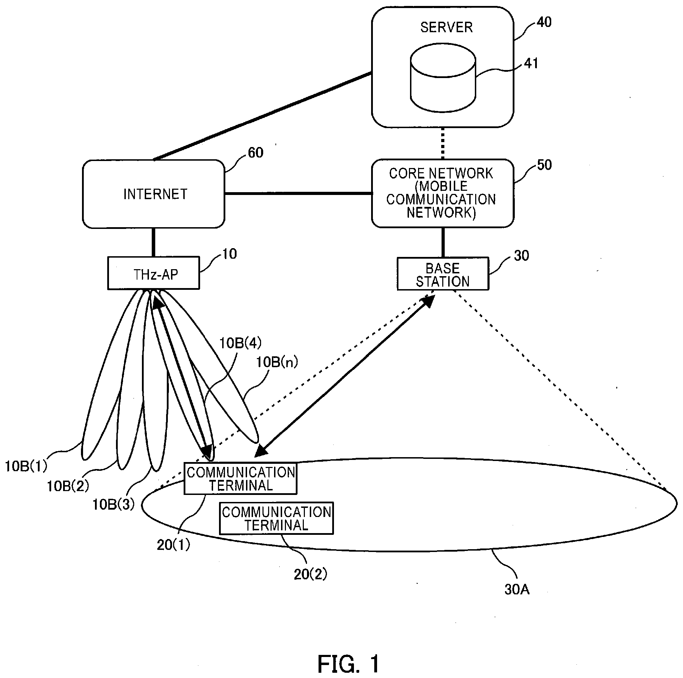

FIG. 1 is an illustration showing an example of a schematic configuration of a communication system according to the present embodiment. In FIG. 1, the communication system according to the present embodiment is provided with an access point apparatus of wireless connection (hereinafter also referred to as "THz-AP") 10 using radio waves in a terahertz band, a base station 30 of a mobile communication network (hereinafter also referred to as "mobile network"), and a server 40. The terahertz band is a frequency range of 100 GHz to 10 THz, and a frequency range of, for example, 100 GHz to 400 GHz is suitable as a frequency of radio medium of the wireless connection. The THz-AP 10 is capable of performing a radio communication with a communication terminal 20 using radio waves in the terahertz band. The THz-AP 10 may be a wireless LAN access point apparatus, or an access point apparatus that complies with standards for the next-generation mobile communication systems such as the 6th generation, the 7th generation, or the like. The communication system may include the communication terminal 20.

The THz-AP 10 of the present embodiment forms plural narrow beams (for example, n beams) 10B(1) to 10B(n) that have antenna directivities different from each other and are set identifiers different from each other for a target radio communication area, and is capable of performing a radio communication with the communication terminals 20(1) and 20(2) using radio waves in the terahertz band for each of the beams. The THz-AP 10 forms plural narrow beams with a beam angle width of 5 degrees or less using, for example, plural small antennas. The THz-AP 10 may use an array antenna in which plural antenna elements are disposed, and direct each beam in an arbitrary direction by a beamforming control that controls phase and amplitude of each antenna element.

The THz-AP 10 is located, for example, in doors in a building or the like, and is capable of communicating with the server 40 through the Internet 60 connected via a wired or wireless communication line.

The base station 30 is capable of forming a cell 30A that overlaps at least partially with the radio communication area of the THz-AP 10, and performing radio communications with the communication terminals 20(1) and 20(2) when the communication terminals 20(1) and 20(2) are located in the cell 30A. The base station 30 is, for example, a base station that complies with the standards of the 5th generation mobile communication system, which is referred to as "gNodeB" or "gNB". The base station 30 may be a base station that complies with the standards of the 4th generation mobile communication system or a base station that complies with the LTE or LTE-Advanced standards, which is also referred to as "eNodeB" or "eNB", or may be a base station that complies with the standards for the next-generation mobile communication systems such as the 6th generation or the like.

The server 40 is capable of communicating with the communication terminals 20(1) and 20(2) via the base station 30 of the mobile communication network. For example, the server 40 is capable of communicating with the communication terminals 20(1) and 20(2) through the Internet 60, the core network 50 of the mobile communication network and the base station 30. When the server 40 and the core network 50 of the mobile communication network are connected to each other, the server 40 may communicate with the communication terminals 20(1) and 20(2) through the core network 50 of the mobile communication network and the base station 30, without going through the Internet 60.

The server 40 is capable of communicating with the THz-AP 10 via the Internet 60 which is another communication network different from the mobile communication network. If the THz-AP 10 is connectable to the core network 50 of the mobile communication network via the base station 30, the server 40 may communicate with the THz-AP 10 via the core network 50 of the mobile communication network and the base station 30.

The server 40 may have a server function of at least one of an encryption key server and a password server. The server 40 has a DB 41 as a storage section that stores, for example, various kinds of information such as identification information of the THz-AP 10, various kinds of information such as identification information of the beam formed by the THz-AP 10, various kinds of information such as identification information of the communication terminals 20(1) and 20(2), information of random common encryption key so as to be used for communications between the THz-AP 10 and the communication terminals 20(1) and 20(2), and so on.

Each of the communication terminals 20(1) and 20(2) is called a user equipment (UE), a mobile station, a mobile device, a terminal apparatus, an IoT apparatus, or the like, and has a radio communication function of the terahertz band to and from the THz-AP 10 and a radio communication function to and from the base station 30. For example, each of the communication terminals 20(1) and 20(2) is capable of connecting to the core network 50 of the mobile communication network via the base station 30 and starting a mobile communication, based on subscriber information etc. stored in a built-in storage medium or a removable storage medium (for example, SIM or USIM).

Each of the communication terminals 20(1) and 20(2) is capable of connecting to the THz-AP 10 based on an SSID (Service Set Identifier) and an initial password as authentication information stored in the storage medium, and starting a communication with the THz-AP 10 (hereinafter also simply referred to as "radio communication") using the common encryption key received from the server 40 and stored in the storage medium.

It is noted that, in the example of FIG. 1, the communication terminal 20(1) performs a radio communication with the THz-AP 10 via the fourth beam 10B(4) of the THz-AP 10, and also performs a mobile communication via the base station 30.

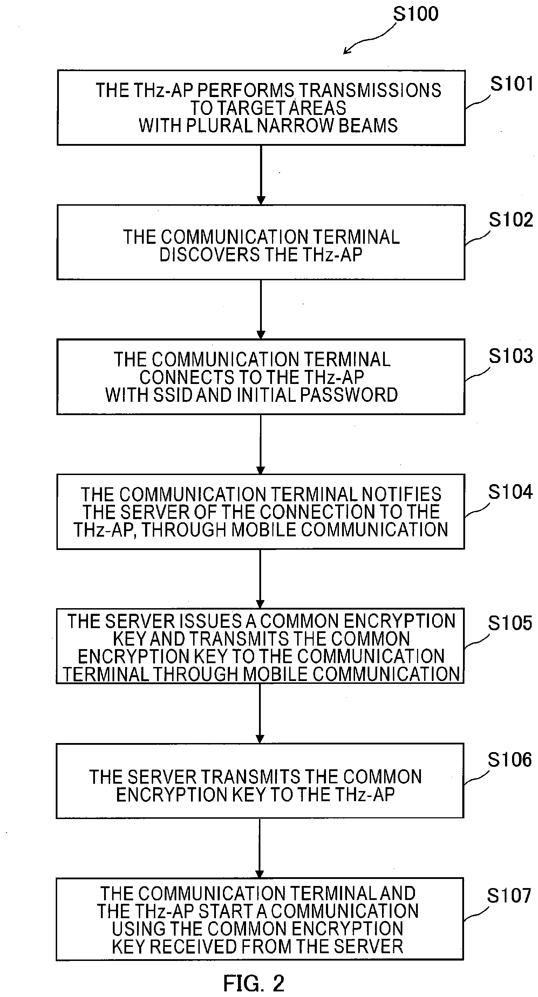

FIG. 2 is a flowchart showing an example of procedures S100 when starting a communication between the communication terminal 20 and the THz-AP (access point apparatus) 10 in the communication system according to the present embodiment.

In FIG. 2, the THz-AP 10 forms plural (n) narrow beams 10B(1) to 10B(n) to which identifiers different from each other (beam identifiers) are set for the target area (radio communication areas) with which the cell 30 of the mobile network overlaps, and transmits a signal for accepting a connection request from the communication terminal 20, with respect with each beam 10 (S101).

Next, when the communication terminal 20 discovers the THz-AP 10 (S102), the communication terminal 20 transmits a connection request to the THz-AP 10 based on the authentication information (SSID, initial password) that is set in advance for the THz-AP 10 and establishes a connection to the THz-AP 10 (S103). Thereby, the THz-AP 10 is capable of confirming whether the communication terminal 20 has the authority to connect to the THz-AP 10.

Next, the communication terminal 20 notifies the server 40 of information on the connection request regarding the connection to the THz-AP 10 through the mobile communication (S104).

At the timing when the connection request is made from the communication terminal 20 to the THz-AP 10 based on the authentication information and the information of the connection request is received from the communication terminal 20 through the mobile communication via the base station 30 of the mobile communication network, the server 40 issues a common encryption key used for a communication between the THz-AP 10 and the communication terminal 20, and transmits the common encryption key to the communication terminal 20 through the mobile communication via the base station of the mobile communication network (S105). Herein, if the information of the connection request received from the communication terminal 20 includes a beam identifier, the common encryption key used for the communication between the THz-AP 10 and the communication terminal 20 via the beam is issued.

Further, the server 40 transmits the common encryption key to the THz-AP 10 via the Internet 60 which is the other communication network (S106).

Next, the communication terminal 20 receives the common encryption key from the server 40 through the mobile communication via the base station of the mobile communication network, the THz-AP 10 receives the common encryption key from the server 40 via the Internet 60, and the communication terminal 20 and the THz-AP 10 start a radio communication using the common encryption key (S107).

As described above, according to the present embodiment, even in the open network environment using the access point apparatus of wireless connection, it is capable of performing a high confidential and secure communication between the THz-AP (access point apparatus) 10 and the communication terminal 20.

In particular, according to the present embodiment, since it is capable using high-frequency radio waves in the terahertz band that do not or difficult to pass through a wall and realizing a narrow beam pattern with a beam width of less than 5 degrees, for the radio communication between the THz-AP 10 and the communication terminal 20, a communication of maintaining high confidentiality can be performed.

Moreover, in particular, according to the present embodiment, it is possible to ensure even higher security by transmitting the encryption key including highly random common password different from the initial password to both the communication terminal 20 and the THz-AP 10 through the mobile network.

Since the present invention enables the stable construction of a physically highly secure communication system using the terahertz access point, it is possible to contribute to achieving Goal 9 of the Sustainable Development Goals (SDGs), "Build foundation for industry and technological innovation".

It is noted that, the process steps and configuration elements of the access point apparatus, communication terminal, server and communication system described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, various kinds of radio communication apparatuses, Node B, terminal, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing units or the like used for establishing the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may by executed by a computer or processor.

The medium may be a non-transitory recording medium. Further, the code of the program may be executable by being read by a computer, a processor, or another device or an apparatus machine, and the format is not limited to a specific format. For example, the code of the program may be any of a source code, an object code, and a binary code, and may be a mixture of two or more of those codes.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the scope of the present disclosures. Therefore, the present disclosures should not be limited to examples and designs described in the present specification and should be recognized to be in the broadest scope corresponding to principles and novel features disclosed in the present specification.

### REFERENCE SIGNS LIST

10: access point apparatus
10B: beam
20: terminal apparatus
30: base station
30A: cell
40: server
41: DB
50: core network
60: Internet

## Claims

1. A server (40) for use in a communication system comprising a base station (30) of a mobile communication network that forms a cell overlapping at least partially with a radio communication area of an access point apparatus and an access point apparatus (10) of wireless connection that forms plural beams (10B) for a radio communication area using radio waves in a terahertz band and is capable of performing a radio communication with a communication terminal (20) for each beam in the terahertz band, the server (40) comprising:
means for receiving information of a connection request from the communication terminal (20) via the base station (30) of the mobile communication network, when the connection request is made from the communication terminal (20) to the access point apparatus (10) based on authentication information that is set in advance;
means for issuing a common encryption key used for communication between the access point apparatus (10) and the communication terminal (20) via one of the plural beams (10B) using the radio waves in the terahertz band, when receiving the information of the connection request from the communication terminal (20);
means for transmitting the common encryption key to the communication terminal (20) via the base station (30) of the mobile communication network; and
means for transmitting the common encryption key to the access point apparatus (10) via a core network (50) of the mobile communication network and the base station (30) of the mobile communication network.

2. An access point apparatus (10) of wireless connection that forms plural beams (10B) for a radio communication area using radio waves in a terahertz band and is capable of performing a radio communication with a communication terminal (20) for each beam in the terahertz band, the access point apparatus (10) being for use in a communication system comprising a base station (30) of a mobile communication network that forms a cell overlapping at least partially with a radio communication area of an access point apparatus and comprising
means for receiving a connection request transmitted from the communication terminal (20) based on authentication information that is set in advance;
means for receiving a common encryption key from the server (40) according to claim 1 via a core network (50) of the mobile communication network and the base station (30) of the mobile communication network; and
means for starting a communication with the communication terminal (20) via one of the plural beams (10B) using the radio waves in the terahertz band, by using the common encryption key.

3. A communication system, comprising:
the access point apparatus (10) of claim 2, the access point apparatus (10) being provided as a separate apparatus different from the base station (30) of the mobile network;
the base station (30) of a mobile communication network that forms a cell (30A) overlapping at least partially with a radio communication area of the access point apparatus (10), the base station (30) being capable of performing a radio communication with a communication terminal (20) when the communication terminal (20) is located in the cell (30A), the base station (30) being provided as a separate apparatus different from the access point apparatus (10); and
the server (40) of claim 1, capable of communicating with the communication terminal (20) via the base station (30) of the mobile communication network and communicating with the access point apparatus (10) via the core network (50) of the mobile communication network and the base station (30) of the mobile communication network,
wherein the server (40):
receives information of a connection request from the communication terminal (20) via the base station (30) of the mobile communication network, when the connection request is made from the communication terminal (20) to the access point apparatus (10) based on authentication information that is set in advance;
issues a common encryption key used for communication between the access point apparatus (10) and the communication terminal (20) via the one of the plural beams (10B) using the radio waves in the terahertz band, when receiving the information of the connection request from the communication terminal (20);
transmits the common encryption key to the communication terminal (20) via the base station (30) of the mobile communication network; and
transmits the common encryption key to the access point apparatus (10) via the core network (50) and the base station (30) of the mobile communication network, and
wherein the access point apparatus (10):
receives the common encryption key from the server (40) via the core network of the mobile communication network and the base station (30) of the mobile communication network; and
starts a communication with the communication terminal (20) via the beam (10B) using the radio waves in the terahertz band, by using the common encryption key.

4. The communication system according to claim 3,
wherein the access point apparatus (10) forms plural beams (10B) having antenna directivities different from each other, the plural beams (10B) being set identifiers different from each other for the radio communication area, and
wherein the server (40) issues a common encryption key used for communication between the access point apparatus (10) and the communication terminal (20) via one of the plural beams (10B), when the identifier of the one of the plural beams (10B) is included in the information of the connection request received from the communication terminal (20).

5. The communication system according to claim 3 or 4, further comprising a communication terminal (20) capable of performing a communication via the access point apparatus (10) and a communication via the base station (30) of the mobile communication network, and
wherein the communication terminal (20):
transmits the connection request to the access point apparatus (10) based on the authentication information, in an area where the radio communication area of the access point apparatus (10) and the cell (30A) overlap;
transmits the information of the connection request to the server (40) via the base station (30) of the mobile communication network;
receives the common encryption key from the server (40) via the base station (30) of the mobile communication network; and
starts a communication with the access point apparatus (10) via the one of the plural beams (10B) using the radio waves in the terahertz band, by using the common encryption key.

6. A method for use in a communication system according to claim 3, for performing a communication between a communication terminal (20) and an access point apparatus (10) of wireless connection that forms plural beams (10B) for a radio communication area using radio waves in a terahertz band and is capable of performing a radio communication with a communication terminal (20) for each beam (10B) in the terahertz band, the access point apparatus (10) being provided as a separate apparatus different from the base station (30) of the mobile communication network, the method comprising:
transmitting a connection request to the access point apparatus (10) based on authentication information that is set in advance, by the communication terminal (20);
receiving the connection request transmitted from the communication terminal (20), by the access point apparatus (10);
receiving information of the connection request from the communication terminal (20) via the base station (30) of the mobile communication network, by the server (40), when there the connection request is made from the communication terminal (20) to the access point apparatus (10) based on authentication information that is set in advance;
issuing a common encryption key used for communication between the access point apparatus (10) and the communication terminal (20) via one of the plural beams (10B) using the radio waves in the terahertz band, by the server (40), when receiving the information of the connection request from the communication terminal (20);
transmitting the common encryption key to the communication terminal (20) via the base station (30) of the mobile communication network, by the server (40);
transmitting the common encryption key to the access point apparatus (10) via the core network (50) of the mobile communication network and the base station (30) of the mobile communication network, by the server (40);
receiving the common encryption key from the server (40) via the core network (50) of the mobile communication network and the base station (30) of the mobile communication network, by the access point apparatus (10);
receiving the common encryption key from the server (40) via the base station (30) of the mobile communication network, by the communication terminal (20);
starting a communication with the communication terminal (20) via the one of the plural beams (10B) using the radio waves in the terahertz band, by using the common encryption key, by the access point apparatus (10); and
starting a communication with the access point apparatus (10) via the one of the plural beams (10B) using the radio waves in the terahertz band, by using the common encryption key, by the communication terminal (20).

7. A program, which, when executed by a computer or processor of the server (40) of claim 1, carries out following steps:
receiving the information of the connection request from the communication terminal (20) via a base station (30) of a mobile communication network, when the connection request is made from the communication terminal (20) to the access point apparatus (10) based on authentication information that is set in advance;
issuing a common encryption key used for communication between the access point apparatus (10) and the communication terminal (20) via the one of the plural beams (10B) using the radio waves in the terahertz band, when receiving the information of the connection request from the communication terminal (20);
transmitting the common encryption key to the communication terminal (20) via the base station (30) of the mobile communication network; and
transmitting the common encryption key to the access point apparatus (10) via the core network (50) of the mobile communication network and the base station (30) of the mobile communication network.

8. A program, which, when executed by a computer or processor of the access point apparatus (10) of claim 2, carries out following steps:
receiving the connection request transmitted from the communication terminal (20) based on authentication information that is set in advance;
receiving the common encryption key from the server (40) via the core network (50) of the mobile communication network and the base station (30) of the mobile communication network; and
starting a communication with the communication terminal (20) via the one of the plural beams (10B) using the radio waves in the terahertz band, by using the common encryption key.

## Patentansprüche

1. Ein Server (40) zur Verwendung in einem Kommunikationssystem, umfassend eine Basisstation (30) eines Mobilkommunikationsnetzes, die eine Zelle bildet, die sich zumindest teilweise mit einem Funkkommunikationsbereich einer Zugangspunktvorrichtung überlappt, und eine Zugangspunktvorrichtung (10) einer drahtlosen Verbindung, die mehrere Strahlen (10B) für einen Funkkommunikationsbereich unter Verwendung von Funkwellen in einem Terahertzband bildet und in der Lage ist, für jeden Strahl in dem Terahertzband eine Funkkommunikation mit einem Kommunikationsendgerät (20) durchzuführen, wobei der Server (40) umfasst:
Mittel zum Empfangen von Informationen einer Verbindungsanforderung von dem Kommunikationsendgerät (20) über die Basisstation (30) des Mobilkommunikationsnetzes, wenn die Verbindungsanforderung von dem Kommunikationsendgerät (20) an die Zugangspunktvorrichtung (10) auf der Grundlage von im Voraus festgelegten Authentifizierungsinformationen gestellt wird;
Mittel zum Ausgeben eines gemeinsamen Verschlüsselungsschlüssels, der für die Kommunikation zwischen der Zugangspunktvorrichtung (10) und dem Kommunikationsendgerät (20) über einen der mehreren Strahlen (10B) unter Verwendung der Funkwellen in dem Terahertzband verwendet wird, wenn die Informationen der Verbindungsanforderung von dem Kommunikationsendgerät (20) empfangen werden;
Mittel zum Übertragen des gemeinsamen Verschlüsselungsschlüssels an das Kommunikationsendgerät (20) über die Basisstation (30) des Mobilkommunikationsnetzes; und
Mittel zum Übertragen des gemeinsamen Verschlüsselungsschlüssels an die Zugangspunktvorrichtung (10) über ein Kernnetzwerk (50) des Mobilkommunikationsnetzes und die Basisstation (30) des Mobilkommunikationsnetzes.

2. Eine Zugangspunktvorrichtung (10) einer drahtlosen Verbindung, die mehrere Strahlen (10B) für einen Funkkommunikationsbereich unter Verwendung von Funkwellen in einem Terahertzband bildet und in der Lage ist, für jeden Strahl in dem Terahertzband eine Funkkommunikation mit einem Kommunikationsendgerät (20) durchzuführen, wobei die Zugangspunktvorrichtung (10) zur Verwendung in einem Kommunikationssystem vorgesehen ist, das eine Basisstation (30) eines Mobilkommunikationsnetzes umfasst, die eine Zelle bildet, die sich zumindest teilweise mit einem Funkkommunikationsbereich einer Zugangspunktvorrichtung überlappt, und umfassend:
Mittel zum Empfangen einer von dem Kommunikationsendgerät (20) auf der Grundlage von im Voraus festgelegten Authentifizierungsinformationen übertragenen Verbindungsanforderung;
Mittel zum Empfangen eines gemeinsamen Verschlüsselungsschlüssels von dem Server (40) nach Anspruch 1 über ein Kernnetzwerk (50) des Mobilkommunikationsnetzes und die Basisstation (30) des Mobilkommunikationsnetzes; und
Mittel zum Starten einer Kommunikation mit dem Kommunikationsendgerät (20) über einen der mehreren Strahlen (10B) unter Verwendung der Funkwellen in dem Terahertzband durch Verwendung des gemeinsamen Verschlüsselungsschlüssels.

3. Ein Kommunikationssystem, umfassend:
die Zugangspunktvorrichtung (10) nach Anspruch 2, wobei die Zugangspunktvorrichtung (10) als eine von der Basisstation (30) des Mobilfunknetzes verschiedene separate Vorrichtung vorgesehen ist;
die Basisstation (30) eines Mobilkommunikationsnetzes, die eine Zelle (30A) bildet, die sich zumindest teilweise mit einem Funkkommunikationsbereich der Zugangspunktvorrichtung (10) überlappt, wobei die Basisstation (30) in der Lage ist, eine Funkkommunikation mit einem Kommunikationsendgerät (20) durchzuführen, wenn sich das Kommunikationsendgerät (20) in der Zelle (30A) befindet, wobei die Basisstation (30) als eine von der Zugangspunktvorrichtung (10) verschiedene separate Vorrichtung vorgesehen ist; und
den Server (40) nach Anspruch 1, der in der Lage ist, mit dem Kommunikationsendgerät (20) über die Basisstation (30) des Mobilkommunikationsnetzes zu kommunizieren und mit der Zugangspunktvorrichtung (10) über das Kernnetzwerk (50) des Mobilkommunikationsnetzes und die Basisstation (30) des Mobilkommunikationsnetzes zu kommunizieren,
wobei der Server (40):
Informationen einer Verbindungsanforderung von dem Kommunikationsendgerät (20) über die Basisstation (30) des Mobilkommunikationsnetzes empfängt, wenn die Verbindungsanforderung von dem Kommunikationsendgerät (20) an die Zugangspunktvorrichtung (10) auf der Grundlage von im Voraus festgelegten Authentifizierungsinformationen gestellt wird;
einen gemeinsamen Verschlüsselungsschlüssel ausgibt, der für die Kommunikation zwischen der Zugangspunktvorrichtung (10) und dem Kommunikationsendgerät (20) über einen der mehreren Strahlen (10B) unter Verwendung der Funkwellen in dem Terahertzband verwendet wird, wenn die Informationen der Verbindungsanforderung von dem Kommunikationsendgerät (20) empfangen werden;
den gemeinsamen Verschlüsselungsschlüssel an das Kommunikationsendgerät (20) über die Basisstation (30) des Mobilkommunikationsnetzes überträgt; und
den gemeinsamen Verschlüsselungsschlüssel an die Zugangspunktvorrichtung (10) über das Kernnetzwerk (50) und die Basisstation (30) des Mobilkommunikationsnetzes überträgt, und
wobei die Zugangspunktvorrichtung (10):
den gemeinsamen Verschlüsselungsschlüssel von dem Server (40) über das Kernnetzwerk des Mobilkommunikationsnetzes und die Basisstation (30) des Mobilkommunikationsnetzes empfängt; und
eine Kommunikation mit dem Kommunikationsendgerät (20) über den Strahl (10B) unter Verwendung der Funkwellen in dem Terahertzband durch Verwendung des gemeinsamen Verschlüsselungsschlüssels startet.

4. Das Kommunikationssystem nach Anspruch 3,
wobei die Zugangspunktvorrichtung (10) mehrere Strahlen (10B) mit voneinander verschiedenen Antennenrichtcharakteristiken bildet, wobei den mehreren Strahlen (10B) für den Funkkommunikationsbereich voneinander verschiedene Kennungen zugewiesen sind, und
wobei der Server (40) einen gemeinsamen Verschlüsselungsschlüssel ausgibt, der für die Kommunikation zwischen der Zugangspunktvorrichtung (10) und dem Kommunikationsendgerät (20) über einen der mehreren Strahlen (10B) verwendet wird, wenn die Kennung des einen der mehreren Strahlen (10B) in den von dem Kommunikationsendgerät (20) empfangenen Informationen der Verbindungsanforderung enthalten ist.

5. Das Kommunikationssystem nach Anspruch 3 oder 4, ferner umfassend ein Kommunikationsendgerät (20), das in der Lage ist, eine Kommunikation über die Zugangspunktvorrichtung (10) und eine Kommunikation über die Basisstation (30) des Mobilkommunikationsnetzes durchzuführen, und
wobei das Kommunikationsendgerät (20):
die Verbindungsanforderung auf der Grundlage der Authentifizierungsinformationen in einem Bereich, in dem sich der Funkkommunikationsbereich der Zugangspunktvorrichtung (10) und die Zelle (30A) überlappen, an die Zugangspunktvorrichtung (10) überträgt;
die Informationen der Verbindungsanforderung über die Basisstation (30) des Mobilkommunikationsnetzes an den Server (40) überträgt;
den gemeinsamen Verschlüsselungsschlüssel von dem Server (40) über die Basisstation (30) des Mobilkommunikationsnetzes empfängt; und
eine Kommunikation mit der Zugangspunktvorrichtung (10) über einen der mehreren Strahlen (10B) unter Verwendung der Funkwellen in dem Terahertzband durch Verwendung des gemeinsamen Verschlüsselungsschlüssels startet.

6. Ein Verfahren zur Verwendung in einem Kommunikationssystem nach Anspruch 3 zum Durchführen einer Kommunikation zwischen einem Kommunikationsendgerät (20) und einer Zugangspunktvorrichtung (10) einer drahtlosen Verbindung, die mehrere Strahlen (10B) für einen Funkkommunikationsbereich unter Verwendung von Funkwellen in einem Terahertzband bildet und in der Lage ist, für jeden Strahl (10B) in dem Terahertzband eine Funkkommunikation mit einem Kommunikationsendgerät (20) durchzuführen, wobei die Zugangspunktvorrichtung (10) als eine von der Basisstation (30) des Mobilkommunikationsnetzes verschiedene separate Vorrichtung vorgesehen ist, wobei das Verfahren umfasst:
das Übertragen einer Verbindungsanforderung an die Zugangspunktvorrichtung (10) auf der Grundlage von im Voraus festgelegten Authentifizierungsinformationen durch das Kommunikationsendgerät (20);
das Empfangen der von dem Kommunikationsendgerät (20) übertragenen Verbindungsanforderung durch die Zugangspunktvorrichtung (10);
das Empfangen von Informationen der Verbindungsanforderung von dem Kommunikationsendgerät (20) über die Basisstation (30) des Mobilkommunikationsnetzes durch den Server (40), wenn die Verbindungsanforderung von dem Kommunikationsendgerät (20) an die Zugangspunktvorrichtung (10) auf der Grundlage von im Voraus festgelegten Authentifizierungsinformationen gestellt wird;
das Ausgeben eines gemeinsamen Verschlüsselungsschlüssels, der für die Kommunikation zwischen der Zugangspunktvorrichtung (10) und dem Kommunikationsendgerät (20) über einen der mehreren Strahlen (10B) unter Verwendung der Funkwellen in dem Terahertzband verwendet wird, durch den Server (40), wenn die Informationen der Verbindungsanforderung von dem Kommunikationsendgerät (20) empfangen werden;
das Übertragen des gemeinsamen Verschlüsselungsschlüssels an das Kommunikationsendgerät (20) über die Basisstation (30) des Mobilkommunikationsnetzes durch den Server (40);
das Übertragen des gemeinsamen Verschlüsselungsschlüssels an die Zugangspunktvorrichtung (10) über das Kernnetzwerk (50) des Mobilkommunikationsnetzes und die Basisstation (30) des Mobilkommunikationsnetzes durch den Server (40);
das Empfangen des gemeinsamen Verschlüsselungsschlüssels von dem Server (40) über das Kernnetzwerk (50) des Mobilkommunikationsnetzes und die Basisstation (30) des Mobilkommunikationsnetzes durch die Zugangspunktvorrichtung (10);
das Empfangen des gemeinsamen Verschlüsselungsschlüssels von dem Server (40) über die Basisstation (30) des Mobilkommunikationsnetzes durch das Kommunikationsendgerät (20);
das Starten einer Kommunikation mit dem Kommunikationsendgerät (20) über einen der mehreren Strahlen (10B) unter Verwendung der Funkwellen in dem Terahertzband durch Verwendung des gemeinsamen Verschlüsselungsschlüssels durch die Zugangspunktvorrichtung (10); und
das Starten einer Kommunikation mit der Zugangspunktvorrichtung (10) über einen der mehreren Strahlen (10B) unter Verwendung der Funkwellen in dem Terahertzband durch Verwendung des gemeinsamen Verschlüsselungsschlüssels durch das Kommunikationsendgerät (20).

7. Ein Programm, das, wenn es von einem Computer oder Prozessor des Servers (40) nach Anspruch 1 ausgeführt wird, die folgenden Schritte ausführt:
das Empfangen der Informationen der Verbindungsanforderung von dem Kommunikationsendgerät (20) über eine Basisstation (30) eines Mobilkommunikationsnetzes, wenn die Verbindungsanforderung von dem Kommunikationsendgerät (20) an die Zugangspunktvorrichtung (10) auf der Grundlage von im Voraus festgelegten Authentifizierungsinformationen gestellt wird;
das Ausgeben eines gemeinsamen Verschlüsselungsschlüssels, der für die Kommunikation zwischen der Zugangspunktvorrichtung (10) und dem Kommunikationsendgerät (20) über einen der mehreren Strahlen (10B) unter Verwendung der Funkwellen in dem Terahertzband verwendet wird, wenn die Informationen der Verbindungsanforderung von dem Kommunikationsendgerät (20) empfangen werden;
das Übertragen des gemeinsamen Verschlüsselungsschlüssels an das Kommunikationsendgerät (20) über die Basisstation (30) des Mobilkommunikationsnetzes; und
das Übertragen des gemeinsamen Verschlüsselungsschlüssels an die Zugangspunktvorrichtung (10) über das Kernnetzwerk (50) des Mobilkommunikationsnetzes und die Basisstation (30) des Mobilkommunikationsnetzes.

8. Ein Programm, das, wenn es von einem Computer oder Prozessor der Zugangspunktvorrichtung (10) nach Anspruch 2 ausgeführt wird, die folgenden Schritte ausführt:
das Empfangen der von dem Kommunikationsendgerät (20) auf der Grundlage von im Voraus festgelegten Authentifizierungsinformationen übertragenen Verbindungsanforderung;
das Empfangen des gemeinsamen Verschlüsselungsschlüssels von dem Server (40) über das Kernnetzwerk (50) des Mobilkommunikationsnetzes und die Basisstation (30) des Mobilkommunikationsnetzes; und
das Starten einer Kommunikation mit dem Kommunikationsendgerät (20) über einen der mehreren Strahlen (10B) unter Verwendung der Funkwellen in dem Terahertzband durch Verwendung des gemeinsamen Verschlüsselungsschlüssels.

## Revendications

1. Serveur (40) destiné à être utilisé dans un système de communication comprenant une station de base (30) d'un réseau de communication mobile qui forme une cellule chevauchant au moins partiellement une région de communication radio d'un appareil point d'accès, et un appareil point d'accès (10) de connexion sans fil qui forme plusieurs faisceaux (10B) relatifs à une région de communication radio au moyen d'ondes radio de la bande térahertz et qui est capable d'établir une communication radio avec un terminal de communication (20) relativement à chaque faisceau de la bande térahertz, le serveur (40) comprenant :
un moyen pour recevoir des informations concernant une demande de connexion en provenance du terminal de communication (20) par l'intermédiaire de la station de base (30) du réseau de communication mobile, lorsque la demande de connexion est faite par le terminal de communication (20) auprès de l'appareil point d'accès (10) en fonction d'informations d'authentification définies au préalable,
un moyen pour émettre une clé de chiffrement commune utilisée pour la communication entre l'appareil point d'accès (10) et le terminal de communication (20) par l'intermédiaire d'un des plusieurs faisceaux (10B), au moyen des ondes radio de la bande térahertz, lors de la réception des informations concernant la demande de connexion en provenance du terminal de communication (20),
un moyen pour transmettre la clé de chiffrement commune au terminal de communication (20) par l'intermédiaire de la station de base (30) du réseau de communication mobile, et
un moyen pour transmettre la clé de chiffrement commune à l'appareil point d'accès (10) par l'intermédiaire d'un réseau central (50) du réseau de communication mobile et de la station de base (30) du réseau de communication mobile.

2. Appareil point d'accès (10) de connexion sans fil qui forme plusieurs faisceaux (10B) relatifs à une région de communication radio au moyen d'ondes radio d'une bande térahertz et qui est capable de réaliser une communication radio avec un terminal de communication (20) relativement à chaque faisceau de la bande térahertz, l'appareil point d'accès (10) étant destiné à être utilisé dans un système de communication comprenant une station de base (30) d'un réseau de communication mobile qui forme une cellule chevauchant au moins partiellement une région de communication radio d'un appareil point d'accès et comprenant :
un moyen pour recevoir une demande de connexion transmise par le terminal de communication (20) en fonction d'informations d'authentification définies au préalable,
un moyen pour recevoir une clé de chiffrement commune en provenance du serveur (40) selon la revendication 1, par l'intermédiaire d'un réseau central (50) du réseau de communication mobile et de la station de base (30) du réseau de communication mobile, et
un moyen pour lancer une communication avec le terminal de communication (20) par l'intermédiaire d'un des plusieurs faisceaux (10B) au moyen des ondes radio de la bande térahertz, grâce à la clé de chiffrement commune.

3. Système de communication, comprenant :
l'appareil point d'accès (10) selon la revendication 2, l'appareil point d'accès (10) étant prévu sous la forme d'un appareil distinct de la station de base (30) du réseau mobile,
la station de base (30) d'un réseau de communication mobile qui forme une cellule (30A) chevauchant au moins partiellement une région de communication radio de l'appareil point d'accès (10), la station de base (30) étant capable de réaliser une communication radio avec un terminal de communication (20) lorsque le terminal de communication (20) se trouve dans la cellule (30A), la station de base (30) étant prévue sous la forme d'un appareil distinct de l'appareil point d'accès (10), et
le serveur (40) selon la revendication 1, capable de communiquer avec le terminal de communication (20) par l'intermédiaire de la station de base (30) du réseau de communication mobile et de communiquer avec l'appareil point d'accès (10) par l'intermédiaire du réseau central (50) du réseau de communication mobile et de la station de base (30) du réseau de communication mobile,
étant entendu que ledit serveur (40) :
reçoit des informations concernant une demande de connexion en provenance du terminal de communication (20) par l'intermédiaire de la station de base (30) du réseau de communication mobile, lorsque la demande de connexion est faite par le terminal de communication (20) auprès de l'appareil point d'accès (10) en fonction d'informations d'authentification définies au préalable,
émet une clé de chiffrement commune utilisée pour la communication entre l'appareil point d'accès (10) et le terminal de communication (20) par l'intermédiaire de l'un des plusieurs faisceaux (10B), au moyen des ondes radio de la bande térahertz, lors de la réception des informations concernant la demande de connexion en provenance du terminal de communication (20),
transmet la clé de chiffrement commune au terminal de communication (20) par l'intermédiaire de la station de base (30) du réseau de communication mobile, et
transmet la clé de chiffrement commune à l'appareil point d'accès (10) par l'intermédiaire du réseau central (50) et de la station de base (30) du réseau de communication mobile, et
étant entendu que l'appareil point d'accès (10) :
reçoit la clé de chiffrement commune en provenance du serveur (40) par l'intermédiaire du réseau central du réseau de communication mobile et de la station de base (30) du réseau de communication mobile, et
lance une communication avec le terminal de communication (20) par l'intermédiaire du faisceau (10B) au moyen des ondes radio de la bande térahertz, grâce à la clé de chiffrement commune.

4. Système de communication selon la revendication 3,
dans lequel l'appareil point d'accès (10) forme plusieurs faisceaux (10B) présentant des directivités d'antenne différentes les unes des autres, lesdits plusieurs faisceaux (10B) se voyant attribuer des identifiants différents les uns des autres relativement à la région de communication radio, et
dans lequel le serveur (40) émet une clé de chiffrement commune utilisée pour la communication entre l'appareil point d'accès (10) et le terminal de communication (20) par l'intermédiaire d'un des plusieurs faisceaux (10B), lorsque l'identifiant de l'un des plusieurs faisceaux (10B) est compris dans les informations concernant la demande de connexion en provenance du terminal de communication (20).

5. Système de communication selon la revendication 3 ou 4, comprenant en outre un terminal de communication (20) capable de réaliser une communication par l'intermédiaire de l'appareil point d'accès (10) et une communication par l'intermédiaire de la station de base (30) du réseau de communication mobile, et
dans lequel le terminal de communication (20) :
transmet la demande de connexion à l'appareil point d'accès (10) en fonction des informations d'authentification, dans une région où la région de communication radio de l'appareil point d'accès (10) et la cellule (30A) se chevauchent,
transmet les informations concernant la demande de connexion au serveur (40) par l'intermédiaire de la station de base (30) du réseau de communication mobile,
reçoit la clé de chiffrement commune en provenance du serveur (40) par l'intermédiaire de la station de base (30) du réseau de communication mobile, et
lance une communication avec l'appareil point d'accès (10) par l'intermédiaire de l'un des plusieurs faisceaux (10B) au moyen des ondes radio de la bande térahertz, grâce à la clé de chiffrement commune.

6. Procédé destiné à être utilisé dans un système de communication selon la revendication 3, permettant d'établir une communication entre un terminal de communication (20) et un appareil point d'accès (10) de connexion sans fil qui forme plusieurs faisceaux (10B) relatifs à une région de communication radio au moyen d'ondes radio de la bande térahertz et qui est capable de réaliser une communication radio avec un terminal de communication (20) relativement à chaque faisceau (10B) de la bande térahertz, l'appareil point d'accès (10) étant prévu sous la forme d'un appareil distinct de la station de base (30) du réseau de communication mobile, le procédé comprenant :
la transmission, par le terminal de communication (20), d'une demande de connexion à l'appareil point d'accès (10) en fonction d'informations d'authentification définies au préalable,
la réception, par l'appareil point d'accès (10), de la demande de connexion transmise par le terminal de communication (20),
la réception, par le serveur (40), d'informations concernant une demande de connexion en provenance du terminal de communication (20) par l'intermédiaire de la station de base (30) du réseau de communication mobile, lorsque la demande de connexion est faite par le terminal de communication (20) auprès de l'appareil point d'accès (10) en fonction d'informations d'authentification définies au préalable,
l'émission, par le serveur (40), d'une clé de chiffrement commune utilisée pour la communication entre l'appareil point d'accès (10) et le terminal de communication (20) par l'intermédiaire d'un des plusieurs faisceaux (10B), au moyen des ondes radio de la bande térahertz, lors de la réception des informations concernant la demande de connexion en provenance du terminal de communication (20),
la transmission, par le serveur (40), de la clé de chiffrement commune au terminal de communication (20) par l'intermédiaire de la station de base (30) du réseau de communication mobile,
la transmission, par le serveur (40), de la clé de chiffrement commune à l'appareil point d'accès (10) par l'intermédiaire du réseau central (50) du réseau de communication mobile et de la station de base (30) du réseau de communication mobile,
la réception, par l'appareil point d'accès (10), de la clé de chiffrement commune en provenance du serveur (40) par l'intermédiaire du réseau central (50) du réseau de communication mobile et de la station de base (30) du réseau de communication mobile,
la réception, par le terminal de communication (20), de la clé de chiffrement commune en provenance du serveur (40) par l'intermédiaire de la station de base (30) du réseau de communication mobile,
le lancement, par l'appareil point d'accès (10), d'une communication avec le terminal de communication (20) par l'intermédiaire de l'un des plusieurs faisceaux (10B) utilisant les ondes radio de la bande térahertz, grâce à la clé de chiffrement commune, et
le lancement, par le terminal de communication (20), d'une communication avec l'appareil point d'accès (10) par l'intermédiaire de l'un des plusieurs faisceaux (10B), au moyen des ondes radio de la bande térahertz, grâce à la clé de chiffrement commune.

7. Programme qui, lorsqu'il est exécuté par un ordinateur ou un processeur du serveur (40) selon la revendication 1, réalise les étapes suivantes :
la réception des informations concernant la demande de connexion en provenance du terminal de communication (20) par l'intermédiaire d'une station de base (30) d'un réseau de communication mobile, lorsque la demande de connexion est faite par le terminal de communication (20) auprès de l'appareil point d'accès (10) en fonction d'informations d'authentification définies au préalable,
l'émission d'une clé de chiffrement commune utilisée pour la communication entre l'appareil point d'accès (10) et le terminal de communication (20) par l'intermédiaire de l'un des plusieurs faisceaux (10B), au moyen des ondes radio de la bande térahertz, lors de la réception des informations concernant la demande de connexion en provenance du terminal de communication (20),
la transmission de la clé de chiffrement commune au terminal de communication (20) par l'intermédiaire de la station de base (30) du réseau de communication mobile, et
la transmission de la clé de chiffrement commune à l'appareil point d'accès (10) par l'intermédiaire du réseau central (50) du réseau de communication mobile et de la station de base (30) du réseau de communication mobile.

8. Programme qui, lorsqu'il est exécuté par un ordinateur ou un processeur de l'appareil point d'accès (10) selon la revendication 2, réalise les étapes suivantes :
la réception de la demande de connexion transmise par le terminal de communication (20) en fonction d'informations d'authentification définies au préalable,
la réception de la clé de chiffrement commune en provenance du serveur (40) par l'intermédiaire du réseau central (50) du réseau de communication mobile et de la station de base (30) du réseau de communication mobile, et
le lancement d'une communication avec le terminal de communication (20) par l'intermédiaire de l'un des plusieurs faisceaux (10B), au moyen des ondes radio de la bande térahertz, grâce à la clé de chiffrement commune.
